# EUROPÄISCHE PATENTSCHRIFT

(11) **EP 3 031 704 B1**
(45) Veröffentlichungstag und Bekanntmachung des Hinweises auf die Patenterteilung: **01.03.2017**
(21) Anmeldenummer: 15197531.5
(22) Anmeldetag: 02.12.2015
(51) Int. Cl.: B62D 55/21

(54) **GLEISKETTE**
TRACK CHAIN
CHENILLES

(30) Priorität: 13.12.2014 DE 102014018657
(43) Veröffentlichungstag der Anmeldung: 15.06.2016
(73) Patentinhaber: DST Defence Service Tracks GmbH, 66629 Freisen (DE)
(72) Erfinder: Müller, Dr. Winfried, 66629 Freisen (DE)
(74) Vertreter: Feder Walter Ebert

(56) Entgegenhaltungen:
- GB-A- 1 305 080
- US-A- 4 813 750
- US-A- 5 069 510

## Beschreibung

Die Erfindung betrifft eine Gleiskette nach dem Oberbegriff des Patentanspruchs 1.

Eine solche Gleiskette ist aus der DE 101 30 386 A1 bekannt.

Bei der bekannten Gleiskette ist an den Endverbindern zur Erhöhung der Seitenführungskräfte der Gleiskette jeweils eine etwa in Laufrichtung der Kette sich erstreckende Rippe angebracht. Die Rippe kann auch in eine Richtung quer zur Laufrichtung umbiegen, so dass eine verbesserte Traktion erreicht wird. Die an den Endverbindern vorgesehene hervorstehende Rippe verursacht einen erheblichen Bodendruck. Ein solcher Bodendruck ist wegen der damit einhergehenden Umweltschäden unerwünscht.

Aufgabe der Erfindung ist es, eine Gleiskette anzugeben, mit der bei nachgiebigem Untergrund ein verminderter Bodendruck verursacht wird. Nach einem weiteren Ziel der Erfindung soll die Gleiskette möglichst leichtgewichtig sein.

Diese Aufgabe wird durch die Merkmale des Patentanspruchs 1 gelöst. Zweckmäßige Ausgestaltungen der Erfindung ergeben sich aus den Merkmalen der Patentansprüche 2 bis 9.

Nach Maßgabe der Erfindung wird vorgeschlagen, dass an den Kettengliedern jeweils zumindest ein sich in den Zwischenraum zwischen den Verbindern erstreckender, plattenartig ausgebildeter Vorsprung angebracht ist.

Durch die vorgeschlagene Anbringung von plattenartigen Vorsprüngen an den Kettengliedern, welche sich in die jeweiligen Zwischenräume erstrecken, kann bei einer Benutzung der erfindungsgemäßen Gleiskette auf nachgiebigem Untergrund der Bodendruck erheblich vermindert werden. Die vorgeschlagene Maßnahme lässt sich relativ einfach und kostengünstig durchführen. Obgleich mit der vorgeschlagenen Gleiskette eine erhebliche Verminderung des Bodendrucks erreicht werden kann, wird durch das Vorsehen der erfindungsgemäßen Vorsprünge lediglich eine geringe Erhöhung des Gewichts der Gleiskette von höchstens 3% verursacht. Zur Erzielung einer möglichst leichtgewichtigen Bauweise können - wie bei herkömmlichen Leichtgewicht-Gleisketten - all diejenigen Bereiche, welche nicht zur Übertragung von Kräften erforderlich sind, weitgehend ausgespart sein. Die erfindungsgemäßen Vorsprünge ermöglichen also insbesondere die Herstellung einer Gleiskette in Leichtbauweise, ohne dass deren Gewicht wesentlich erhöht wird.

Nach einer vorteilhaften Ausgestaltung der Erfindung umfassen die Verbinder Endverbinder, welche die Kettenglieder an den Außenseiten der Gleiskette miteinander verbinden. Die Zwischenräume umfassen erste Zwischenräume, welche sich zur Außenseite U-förmig öffnen. Mit den Endverbindern werden in herkömmlicher Weise die darin eingesteckten Stahlbolzen aufeinanderfolgender Kettenglieder klemmend miteinander verbunden. Die Verbindung erfolgt in der Regel kraftschlüssig. Die erfindungsgemäßen Vorsprünge können sich nach dieser Ausgestaltung also in die sich zur Außenseite hin U-förmig öffnenden ersten Zwischenräume erstrecken. Sie können die ersten Zwischenräume in Draufsicht auf den entsprechenden Abschnitt der Gleiskette zu zumindest 50%, vorzugsweise zu 60%, besonders bevorzugt zu 70%, ausfüllen.

Vorteilhafterweise umfassen die Vorsprünge sich in die ersten Zwischenräume erstreckende äußere Vorsprünge, welche sich höchstens bis zur Außenseite erstrecken. D.h. die äußeren Vorsprünge erstrecken sich höchstens bis zu einer Außenkante der Endverbinder. Die Außenkante der Endverbinder ist einer Innenkante der Endverbinder abgewandt, welche sich im Montagezustand gegenüberliegend der Kettenglieder befindet. Vorteilhafter-weise erstrecken sich die äußeren Vorsprünge höchstens bis zum 0,8-Fachen einer ersten Breite der ersten Zwischenräume.

In einer vorteilhaften Ausgestaltung umfasst die Gleiskette senkrecht zur Laufrichtung je zwei benachbart angeordnete Kettenglieder, so dass die Gleiskette zwei parallele Reihen von Kettengliedern aufweist. Nach einer weiteren Ausgestaltung umfassen die Verbinder Mittenverbinder, welche zwei senkrecht zur Laufrichtung benachbart angeordnete Kettenglieder miteinander verbinden. Besonders bevorzugt sind die Mittenverbinder so ausgestaltet, dass sie sowohl zwei senkrecht zur Laufrichtung benachbart angeordnete Kettenglieder als auch zwei in Laufrichtung benachbart angeordnete Kettenglieder miteinander verbinden. Dies bedeutet, dass die Mittenverbinder insgesamt eine Verbindung mit zweimal zwei, also vier Kettenglieder herstellen können.

Die Zwischenräume können zweite Zwischenräume umfassen, welche durch zwei in Laufrichtung aufeinanderfolgende Mittenverbinder sowie die damit verbundenen Kettenglieder begrenzt sind. Dabei sind je zwei senkrecht zur Laufrichtung benachbart angeordnete individuelle Kettenglieder vorgesehen. Die zweiten Zwischenräume befinden sich in Draufsicht auf einen Gleiskettenabschnitt innerhalb der Gleiskette zwischen zwei senkrecht zur Laufrichtung benachbarten Kettengliedern. Innenkanten der Kettenglieder und die einander gegenüberliegenden kurzen Kanten der Mittenverbinder begrenzen den im Wesentlichen rechteckig ausgebildeten zweiten Zwischenraum.

Die Vorsprünge können die sich in die zweiten Zwischenräume erstreckenden innere Vorsprünge umfassen, welche sich höchstens bis zum 0,5-Fachen einer zweiten Breite des zweiten Zwischenraums erstrecken. Die Vorsprünge können sich dabei ausgehend von der Innenkanten des jeweiligen Kettenglieds bis höchstens zum 0,5-Fachen einer zweiten Breite des zweiten Zwischenraums erstrecken. Mit je einem an einer Innenkante eines Kettenglieds angeordneten inneren Vorsprung kann der zweite Zwischenraum im Wesentlichen vollständig überdeckt werden. Damit kann der zweite Zwischenraum in Draufsicht durch die inneren Vorsprünge nahezu vollständig überdeckt und damit der durch die vorgeschlagene Gleiskette verursachte Bodendruck weiter vermindert werden.

Nach einer weiteren vorteilhaften Ausgestaltung der Erfindung sind an den Endverbindern weitere Vorsprünge angebracht, welche sich in die ersten Zwischenräume und/oder von der Außenkante der Endverbinder erstrecken. Die weiteren Vorsprünge können ebenfalls plattenartig ausgebildet sein, insbesondere soweit sie sich von der Außenseite der Endverbinder erstrecken. Sofern sich die weiteren Vorsprünge von den kurzen Kanten der Endverbinder in Laufrichtung erstrecken, können diese nach Art eines Wulsts oder dgl. ausgestaltet sein. Damit können die von den kurzen Kanten der Endverbinder in Laufrichtung in die ersten Zwischenräume erstreckenden Vorsprünge nach Art eines Wulsts oder dgl. ausgestaltet sein.

Eine Lauffläche der Kettenglieder kann durch an Rohrkörpern und/oder Stegen angebrachte Laufpolster gebildet sein. Eine durch die Vorsprünge gebildete Lastabtragfläche sowie eine durch die weiteren Vorsprünge gebildete weitere Lastabtragfläche sind vorteilhafterweise bezüglich der Lautfläche zurückgesetzt. D.h. die durch die Vorsprünge gebildeten Lastabtragflächen bewirken eine Verminderung des Bodendrucks insbesondere bei nachgiebigem Untergrund.

Nachfolgend wird ein Ausführungsbeispiel der Erfindung anhand der Zeichnungen näher erläutert. Es zeigen:
- Fig. 1: eine Draufsicht auf einen Abschnitt einer Gleiskette,
- Fig.2: eine Seitenansicht eines Kettenglieds gemäß Fig. 1 und
- Fig. 3: eine Seitenansicht eines Endverbinders gemäß Fig. 1.

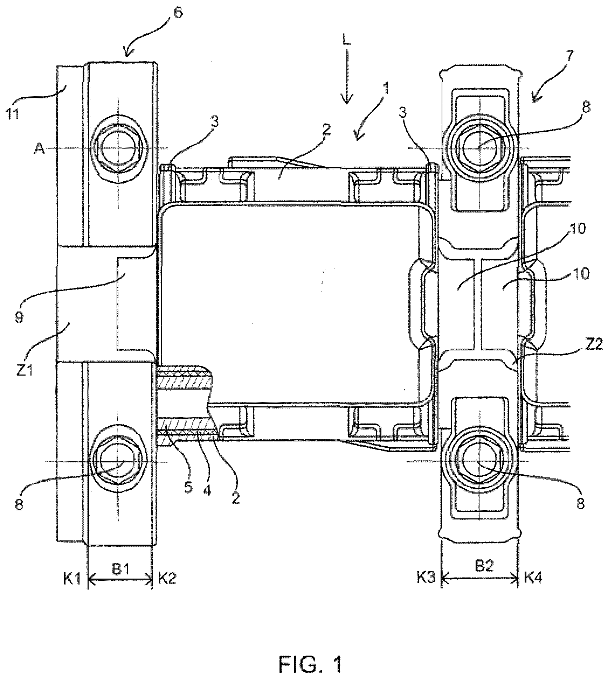

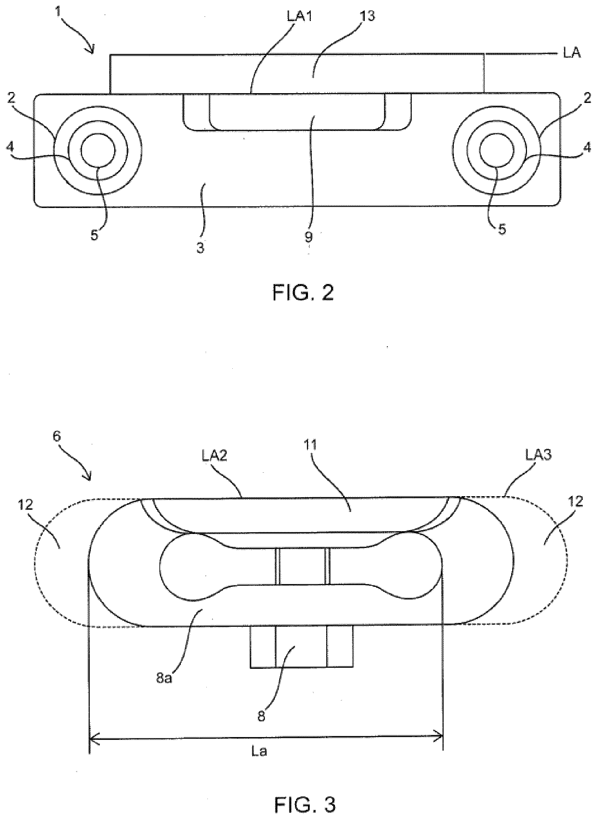

Fig. 1 zeigt eine Draufsicht auf einen Abschnitt einer Gleiskette. Ein Kettenglied 1 umfasst zwei Rohrkörper 2, welche mittels Stegen 3 miteinander verbunden sind. In der Fig. 1 ist ebenfalls ein Teil eines zweiten senkrecht zur Laufrichtung L benachbart zum Kettenglied 1 angeordneten Kettenglieds dargestellt. In den Rohrkörpern 2 sind mittels einer Gummilagerung 4 Stahlbolzen 5 gehalten, welche wie in den Fig. 1 und 2 gezeigt ist zur Gewichtsersparnis auch aus Stahlrohrabschnitten hergestellt sein können. Hervorstehende Abschnitte (hier nicht sichtbar) der Stahlbolzen 5 werden klemmend in Endverbindern 6 sowie in Mittenverbindern 7 gehalten. Zur Herstellung einer klemmenden Verbindung weisen die Endverbinder 6 und die Mittenverbinder 7 jeweils eine Klemmschraube 8 auf, mit welcher ein Klemmkörper 8a (siehe Fig. 3) zur Herstellung einer klemmenden Verbindung mit den Stahlbolzen 5 verformbar ist. Die so entstehende Verbindung ist kraftschlüssig. Die Mittenverbinder 7 sind ähnlich aufgebaut wie die Endverbinder 6. Sie können allerdings einen vom Klemmkörper 8a sich erstreckenden Dornfortsatz (hier nicht gezeigt) aufweisen. Der Dornfortsatz kann auch als Führungszahn bezeichnet werden.

Wie insbesondere aus Fig. 1 ersichtlich ist, ist zwischen den aufeinanderfolgenden Endverbindern 6 ein erster Zwischenraum Z1 gebildet, welcher sich zu einer Außenseite A der Gleiskette hin U-förmig öffnet. Der erste Zwischenraum Z1 ist durch die kurzen Kanten der Endverbinder 6 sowie eine äußere kurze Kante des Kettenglieds 1 begrenzt.

Ein zweiter Zwischenraum Z2 ist in Laufrichtung L zwischen den Mittenverbindern 7 und den benachbarten Kettengliedern 1 gebildet.

Vom Kettenglied 1 erstreckt sich ein plattenartig ausgestalteter äußerer Vorsprung 9 in den ersten Zwischenraum Z1 in Richtung der Außenseite A. Eine erste Breite B1 des ersten Zwischenraums Z1 ist im Wesentlichen gegeben durch den Abstand zwischen einer Außenkante K1 des Endverbinders 6 und der gegenüberliegenden Innenkante K2. Der äußere Vorsprung 9 erstreckt sich zumindest bis zum 0,5-Fachen der ersten Breite B1 bzw. bis zum 0,6-Fachen, besonders bevorzugt bis zum 0,8-Fachen der ersten Breite B1.

Eine zweite Breite B2 des zweiten Zwischenraums Z2 ist im Wesentlichen gegeben durch den Abstand zwischen einer ersten langen Kante K3 des Mittenverbinders 7 und dessen gegenüberliegender zweiter langen Kante K4. In den zweiten Zwischenraum Z2 kann sich vom Kettenglied 1 ein innerer Vorsprung 10 erstrecken. Wie in Fig. 1 gezeigt kann vorgesehen sein, dass jedes der zwei senkrecht zur Laufrichtung benachbart angeordneten Kettenglieder je einen inneren Vorsprung 10 aufweist, wobei sich die inneren Vorsprünge einander gegenüber liegen. Der jeweilige innere Vorsprung erstreckt sich dabei ausgehend von einer Innenkante des jeweiligen Kettenglieds 1 in den zweiten Zwischenraum. Die Innenkante des Kettenglieds wird im Wesentlichen durch die inneren Enden der Rohrkörper und durch die an diesen Enden der Rohrkörper angebrachten inneren Stege 3 gebildet.

Wie in der Fig. 1 dargestellt, sind zwei individuelle innere Vorsprünge 10 vorgesehen. Der innere Vorsprung 10 erstreckt sich höchstens bis zum 0,5-Fachen der zweiten Breite B2, vorzugsweise höchstens bis zum 0,4-Fachen der zweiten Breite B2. Wie aus Fig. 1 ersichtlich ist, wird der zweite Zwischenraum Z2 durch zwei einander gegenüberliegend angeordnete innere Vorsprünge 10 im Wesentlichen vollständig, d.h. vorzugsweise zu zumindest 80%, ausgefüllt. Die einander gegenüberliegenden inneren Vorsprünge 10 sind vorzugsweise symmetrisch, insbesondere spiegelsymmetrisch bezüglich des zweiten Zwischenraums, ausgebildet.

Wie insbesondere aus Fig. 3 ersichtlich ist, können an den Endverbindern 6 weitere Vorsprünge 11 angebracht sein, welche sich von deren Außenkanten K1 in Richtung der Außenseite A der Gleiskette erstrecken. Die weiteren Vorsprünge 11 erstrecken sich in Laufrichtung L zweckmäßigerweise über etwa 80% einer Länge La (siehe Fig. 3) der Endverbinder 6.

Wie insbesondere aus Fig. 3 ersichtlich ist, können an den Endverbindern 6 wulstartige weitere Vorsprünge 12 zur Verlängerung der Länge La vorgesehen sein, welche ebenfalls in den ersten Zwischenraum Z1 ragen können (hier nicht gezeigt).

Fig. 2 zeigt eine Seitenansicht eines Kettenglieds gemäß Fig. 1. Damit zeigt die Fig. 2 eine Draufsicht auf die äußere kurze Kante des Kettenglieds 1, welche den Steg 3 und die Enden der Rohrkörper 2 umfasst. An der äußeren kurzen Kante des Kettenglieds 1 ist der äußere plattenartige Vorsprung 9 angeordnet. Im Beispiel der Fig. 2 ist der äußere Vorsprung 9 an dem Steg 3 angeordnet. Die Dicke des äußeren Vorsprungs 9 beträgt zwischen einem Fünftel und einem Viertel der Höhe des Kettenglieds 1, insbesondere zwischen einem Fünftel und einem Viertel der Höhe des Stegs 3.

Die Kettenglieder 1 sind überdies mit einem Laufpolster 13 versehen, welches beispielsweise aus Gummi hergestellt ist. Eine Außenseite des Laufpolsters 13 bildet eine Lastabtragfläche LA. Dabei ist der äußere plattenartige Vorsprung 9 mit seiner der Lastabtragfläche LA oder dem Laufpolster 13 zugewandten Oberfläche bündig an einer Laufflächenkante des Kettenglieds 1 oder an einer Laufflächenkante des Stegs 3 angeordnet.

Die Anordnung der inneren Vorsprünge 10 auf der Innenkante des Kettenglieds 1, die der in Fig. 2 gezeigten äußeren Kante gegenüber liegt, kann in analoger Weise zur Darstellung der Fig. 2, also analog zu den äußeren Vorsprüngen 9 erfolgen.

Durch die Vorsprünge 9, 10 gebildete erste Lastabtragflächen LA1, durch die weiteren Vorsprünge 11 gebildete zweite Lastabtragflächen LA2 sowie durch die wulstartigen weiteren Vorsprünge 12 gebildete dritte Lastabtragflächen LA3 sind jeweils bezüglich der Lastabtragfläche LA zurückgesetzt.

Vorteilhafterweise weisen die plattenartigen Vorsprünge 9, 10 und 11 eine Dicke von höchstens 5 mm auf. Sie können an den Stegen 3 angeschweißt, angeschmiedet oder angegossen sein.

Durch die erfindungsgemäßen Vorsprünge 9, 10, 11 und 12 werden der erste Zwischenraum Z1 und ggf. der zweite Zwischenraum Z2 in Draufsicht auf ein Kettenglied 1 im Wesentlichen ausgefüllt. Infolgedessen kann damit der von der Gleiskette auf einen nachgiebigen Untergrund ausgeübte Bodendruck erheblich vermindert werden.

### Bezugszeichen liste

- 1: Kettenglied
- 2: Rohrkörper
- 3: Steg
- 4: Gummilagerung
- 5: Stahlbolzen
- 6: Endverbinder
- 7: Mittenverbinder
- 8: Klemmschraube
- 8a: Klemmkörper
- 9: äußerer Vorsprung
- 10: innerer Vorsprung
- 11: weiterer Vorsprung
- 12: wulstartiger weiterer Vorsprung
- 13: Laufpolster

- A: Außenseite
- B1: erste Breite
- B2: zweite Breite
- K1: Außenkante
- K2: Innenkante
- K3: erste lange Kante
- K4: zweite lange Kante
- L: Laufrichtung
- La: Länge
- LA: Lastabtragfläche
- LA1: erste Lastabtragfläche
- LA2: zweite Lastabtragfläche
- LA3: dritte Lastabtragfläche
- Z1: erster Zwischenraum
- Z2: zweiter Zwischenraum

## Patentansprüche

1. Gleiskette, gebildet aus mit Verbindern (6, 7) zu einem Endlosband verbindbaren Kettengliedern (1),
wobei jedes Kettenglied (1) zwei Rohrkörper (2) umfasst, welche mittels Stegen (3) miteinander verbunden sind,
wobei in den Rohrkörpern (2) gummigelagerte Stahlbolzen (5) gehalten sind, welche seitlich über die Rohrkörper (2) hervorstehen, wobei hervorstehende Abschnitte der Stahlbolzen (5) benachbarter Kettenglieder (1) mittels in einer Laufrichtung (L) der Gleiskette sich erstreckender Verbinder (6, 7) miteinander verbunden sind, so dass zwischen zwei aufeinanderfolgenden Verbindern (6, 7) ein Zwischenraum (Z1, Z2) gebildet ist,
**dadurch gekennzeichnet,**
**dass** an den Kettengliedern (1) jeweils zumindest ein sich in den Zwischenraum (Z1, Z2) zwischen den Verbindern (6, 7) erstreckender, plattenartig ausgebildeter Vorsprung (9, 10, 11, 12) angebracht ist

2. Gleiskette nach Anspruch 1,
wobei die Verbinder (6, 7) Endverbinder (6) umfassen, welche die Kettenglieder (1) an den Außenseiten (A) der Gleiskette miteinander verbinden, und wobei die Zwischenräume (Z1, Z2) erste Zwischenräume (Z1) umfassen, welche sich zur Außenseite (A) hin U-förmig öffnen.

3. Gleiskette nach Anspruch 2,
wobei die Vorsprünge (9, 10, 11, 12) sich in die ersten Zwischenräume (Z1) erstreckende äußere Vorsprünge (9) umfassen, welche sich höchstens bis zur Außenseite (A) erstecken.

4. Gleiskette nach Anspruch 3,
wobei sich die äußeren Vorsprünge (9) höchstens bis zum 0,8-Fachen einer ersten Breite (B1) des ersten Zwischenraums (Z1) erstrecken.

5. Gleiskette nach einem der vorhergehenden Ansprüche,
wobei die Verbinder (6, 7) Mittenverbinder (7) umfassen, welche zwei senkrecht zur Laufrichtung (L) benachbart angeordnete Kettenglieder (1) miteinander verbinden, und die Zwischenräume (Z1, Z2) zweite Zwischenräume (Z2) umfassen, welche durch zwei in Laufrichtung (L) aufeinanderfolgende Mittenverbinder (7) sowie die damit verbundenen Kettenglieder (1) begrenzt sind.

6. Gleiskette nach Anspruch 5,
wobei die Vorsprünge (9, 10, 11, 12) sich in die zweiten Zwischenräume (Z2) erstreckende innere Vorsprünge (10) umfassen.

7. Gleiskette nach Anspruch 6,
wobei sich die inneren Vorsprünge (10) höchstens bis zum 0,5-Fachen einer zweiten Breite (B2) des zweiten Zwischenraums (Z2) erstrecken.

8. Gleiskette nach einem der vorhergehenden Ansprüche,
wobei an den Endverbindern (6) weitere Vorsprünge (11) angebracht sind, welche sich in die ersten Zwischenräume (Z1) und/oder von einer Außenkante (A) der Endverbinder (6) erstrecken.

9. Gleiskette nach einem der vorhergehenden Ansprüche,
wobei eine Lauffläche der Kettenglieder (1) durch an den Rohrkörpern (2) und/oder Stegen (3) angebrachte Laufpolster (13) gebildet ist und wobei eine durch die Vorsprünge (9, 10, 11, 12) gebildete Lastabtragfläche (LA, LA1, LA2, LA3) sowie eine durch die weiteren Vorsprünge (9, 10, 11,12) gebildete weitere Lastabtragfläche (LA2, LA3) bezüglich der Lauffläche zurückgesetzt sind.

## Claims

1. Track chain, formed from chain links (1) which can be connected by connectors (6, 7) to form an endless band,
wherein each chain link (1) comprises two tubular bodies (2) which are interconnected by means of webs (3),
wherein rubber-mounted steel bolts (5) are held in the tubular bodies (2) and project laterally beyond the tubular bodies (2),
wherein projecting portions of the steel bolts (5) of adjacent chain links (1) are interconnected by means of connectors (6, 7) extending in a running direction (L) of the track chain, such that an interspace (Z1, Z2) is formed between two successive connectors (6, 7),
**characterized in that**
at least one plate-like projection (9, 10, 11, 12) extending in the interspace (Z1, Z2) between the connectors (6, 7) is mounted on each of the chain links (1).

2. Track chain according to Claim 1,
wherein the connectors (6, 7) comprise end connectors (6) which interconnect the chain links (1) on the outer sides (A) of the track chain, and wherein the interspaces (Z1, Z2) comprise first interspaces (Z1) which open in a U-shape to the outer side (A).

3. Track chain according to Claim 2,
wherein the projections (9, 10, 11, 12) comprise outer projections (9) which extend in the first interspaces (Z1) and which extend at most to the outer side (A).

4. Track chain according to Claim 3,
wherein the outer projections (9) extend at most up to 0.8 times a first width (B1) of the first interspace (Z1).

5. Track chain according to one of the preceding claims,
wherein the connectors (6, 7) comprise central connectors (7) which interconnect two chain links (1) arranged adjacently perpendicular to the running direction (L), and the interspaces (Z1, Z2) comprise second interspaces (Z2) which are delimited by two successive central connectors (7) in the running direction (L) and by the chain links (1) connected thereto.

6. Track chain according to Claim 5,
wherein the projections (9, 10, 11, 12) comprise inner projections (10) extending into the second interspaces (Z2).

7. Track chain according to Claim 6,
wherein the inner projections (10) extend at most up to 0.5 times a second width (B2) of the second interspace (Z2).

8. Track chain according to one of the preceding claims,
wherein the end connectors (6) have mounted thereon further projections (11) which extend into the first interspaces (Z1) and/or from an outer edge (A) of the end connectors (6).

9. Track chain according to one of the preceding claims,
wherein a running surface of the chain links (1) is formed by running pads (13) mounted on the tubular bodies (2) and/or webs (3) and wherein a load-dissipating surface (LA, LA1, LA2, LA3) formed by the projections (9, 10, 11, 12) and also a further load-dissipating surface (LA2, LA3) formed by the further projections (9, 10, 11, 12) are set back with respect to the running surface.

## Revendications

1. Chenille, formée de maillons de chaîne (1) pouvant être raccordés par des éléments de liaison (6, 7) pour former une bande sans fin,
chaque maillon de chaîne (1) comprenant deux corps tubulaires (2) qui sont reliés l'un à l'autre au moyen d'éclisses (3),
des boulons d'acier (5) sur paliers en caoutchouc étant retenus dans les corps tubulaires (2), lesquels font saillie latéralement au-delà des corps tubulaires (2), des portions saillantes des boulons d'acier (5) de maillons de chaîne adjacents (1) étant raccordées l'une à l'autre au moyen d'éléments de connexion (6, 7) s'étendant dans une direction de déplacement (L) de la chenille, de sorte qu'un espace intermédiaire (Z1, Z2) soit formé entre deux éléments de connexion successifs (6, 7),
**caractérisée en ce**
**qu'**à chaque fois au moins une saillie (9, 10, 11, 12) réalisée en forme de plaque s'étendant dans l'espace intermédiaire (Z1, Z2) entre les éléments de connexion (6, 7) est montée au niveau des maillons de chaîne (1).

2. Chenille selon la revendication 1,
dans laquelle les éléments de connexion (6, 7) comprennent des éléments de connexions terminaux (6) qui relient ensemble les maillons de chaîne (1) aux côtés extérieurs (A) de la chenille, et les espaces intermédiaires (Z1, Z2) comprenant des premiers espaces intermédiaires (Z1) qui s'ouvrent en forme de U vers le côté extérieur (A).

3. Chenille selon la revendication 2,
dans laquelle les saillies (9, 10, 11, 12) comprennent des saillies extérieures (9) s'étendant dans les premiers espaces intermédiaires (Z1), qui s'étendent au plus jusqu'au côté extérieur (A).

4. Chenille selon la revendication 3,
dans laquelle les saillies extérieures (9) s'étendent au plus jusqu'à 0,8 fois une première largeur (B1) du premier espace intermédiaire (Z1).

5. Chenille selon l'une quelconque des revendications précédentes, dans laquelle les éléments de connexion (6, 7) comprennent des éléments de connexion centraux (7) qui relient ensemble deux maillons de chaîne (1) disposés en position adjacente perpendiculairement à la direction de déplacement (L), et les espaces intermédiaires (Z1, Z2) comprennent des deuxièmes espaces intermédiaires (Z2) qui sont limités par deux éléments de connexion centraux successifs (7) dans la direction de déplacement (L) ainsi que par les maillons de chaîne (1) qui leurs sont connectés.

6. Chenille selon la revendication 5,
dans laquelle les saillies (9, 10, 11, 12) comprennent des saillies intérieures (10) s'étendant dans les deuxièmes espaces intermédiaires (Z2).

7. Chenille selon la revendication 6,
dans laquelle les saillies intérieures (10) s'étendent au plus jusqu'à 0,5 fois une deuxième largeur (B2) du deuxième espace intermédiaire (Z2).

8. Chenille selon l'une quelconque des revendications précédentes,
dans laquelle des saillies supplémentaires (11) sont montées sur les éléments de connexion terminaux (6), lesquelles s'étendent dans les premiers espaces intermédiaires (Z1) et/ou depuis une arête extérieure (A) des éléments de connexion terminaux (6).

9. Chenille selon l'une quelconque des revendications précédentes, dans laquelle une surface de roulement des maillons de chaîne (1) est formée par des coussins de roulement (13) montés sur les corps tubulaires (2) et/ou sur les éclisses (3), et une surface de suppression de charge (LA, LA1, LA2, LA3) formée par les saillies (9, 10, 11, 12) ainsi qu'une surface de suppression de charge (LA2, LA3) supplémentaire formée par les saillies supplémentaires (9, 10, 11, 12) sont en retrait par rapport à la surface de roulement.
